# FASCICULE DE BREVET EUROPEEN

(11) **EP 3 923 195 B1**
(45) Date de publication et mention de la délivrance du brevet: **23.08.2023**
(21) Numéro de dépôt: 20179512.7
(22) Date de dépôt: 11.06.2020
(51) Int. Cl.: G06K 19/02, G06K 19/077

(54) **ETIQUETTE ÉLECTRONIQUE PRÉSENTANT UN CARACTÈRE SOUPLE ET DÉFORMABLE**
ELEKTRONISCHES ETIKETT, DAS EINE ELASTISCHE UND VERFORMBARE EIGENSCHAFT AUFWEIST
ELECTRONIC LABEL WITH A FLEXIBLE AND DEFORMABLE NATURE

(43) Date de publication de la demande: 15.12.2021
(73) Titulaire: PRIMO1D, 38040 Grenoble Cedex 9 (FR)
(72) Inventeur: GUIRIMAND, Anne, 38360 SASSENAGE (FR)
(74) Mandataire: IP Trust

(56) Documents cités:
- EP-A1- 2 362 960
- EP-B1- 2 362 960
- WO-A1-03/047028
- WO-A1-2019/175509
- CN-A- 107 122 815
- FR-A1- 2 429 854

## Description

### DOMAINE DE L'INVENTION

La présente invention concerne une étiquette souple incorporant un dispositif électronique. Elle trouve une application particulière dans le domaine de l'étiquetage électronique d'identification d'objets.

### ARRIERE PLAN TECHNOLOGIQUE DE L'INVENTION

On désigne souvent les étiquettes employées dans ce domaine par la dénomination « étiquette RFID » ( « RFID tag » des initiales de l'expression anglo-saxonne « Radio-Frequency IDentification », c'est-à-dire « identification par radiofréquence »). De telles étiquettes comprennent une puce électronique d'identification présentant des fonctions d'émission-réception radiofréquence couplée à une antenne.

Selon une première approche conventionnelle, l'antenne est formée par des pistes conductrices disposées sur un support plastique ou en papier. La puce est assemblée par collage au support de manière à mettre respectivement en contact ses plots de connexion avec les pistes conductrices formant l'antenne. Le support se présente généralement sous une forme rectangulaire dont les longueurs et largeurs présentent des dimensions de plusieurs centimètres de manière à pouvoir accommoder les dimensions nécessaires de l'antenne et pour faciliter la manipulation de l'étiquette.

L'ensemble fonctionnel constitué de la puce et de son support est généralement désigné par le terme « inlay » dans la littérature anglo-saxonne consacrée. De tels « inlays » sont généralement fabriqués collectivement sur une bande de support et sont disponibles sous la forme d'un rouleau.

Pour former une étiquette électronique d'identification à partir d'un « inlay », on conditionne généralement cet inlay dans un boîtier de protection, par exemple en matière plastique comme cela est documenté pour le brevet US8212676. Les dimensions de l'étiquette ainsi formée sont, dans le document précité, relativement grandes : une hauteur de 5mm, une longueur de 150mm et une largeur de 22mm.

Pour faciliter l'intégration des fonctions d'identification notamment dans des produits textiles, on a recherché à donner un facteur de forme filaire à une étiquette électronique. On connaît ainsi des documents US6329917, WO2016038342, WO2011161336, GB2472025, GB2472026, US20110147462, WO2008080245, CN107122815 ou WO2019175509 des fils textiles incorporant, espacés dans leurs longueurs, les antennes et les puces électroniques. De tels « fils textiles RFID » peuvent être intégrés aux produits textiles au cours de leurs fabrications ou rendus solidaires à ce produit après sa fabrication.

Par « fil textile » ou plus simplement par « fil », on désigne des éléments qui peuvent être tissés ou incorporés dans un produit textile. Ils présentent donc une résistance en tension, une flexibilité, et un facteur de forme conventionnelle dans le domaine du tissage pour être manipulés par les équipements disponibles dans le secteur de la confection.

Il existe des applications dans lesquelles il serait avantageux que l'étiquette RFID présente un caractère souple, qui puisse se plier et se replier sans endommager le dispositif électronique d'identification, et déformable afin de pouvoir se conformer à des contraintes en traction, en flexion et/ou en torsion. C'est notamment le cas lorsque l'étiquette est destinée à être intégrée à un produit textile technique, par exemple au niveau d'une bande élastique d'un bas de contention, ou visant le domaine du sport. Plus généralement, les contraintes que peut subir un produit textile au cours de son lavage peuvent conduire à endommager une étiquette RFID intégrée dans ce produit, par exemple en désolidarisant la puce électronique d'identification de l'antenne. En fournissant une étiquette RFID souple et déformable, on peut absorber ces contraintes et limiter le risque de rendre l'étiquette non fonctionnelle.

Pour les mêmes raisons, une étiquette RFID souple et déformable peut également trouver des applications dans le domaine industriel, par exemple lorsqu'elle est destinée à être intégrée dans un produit souple, tel qu'un pneumatique.

Le document WO2019175509 précité propose un fil textile guipé comprenant une âme principale qui peut présenter un caractère élastique et au moins un premier fil de couverture primaire, constituant ou intégrant le dispositif RFID, enroulé en spires autour de l'âme principale. Ce fil textile RFID présente un caractère élastique en extension, en torsion et en flexion, c'est-à-dire qu'il tend à reprendre sa forme initiale lorsque les efforts qui s'exercent sur le fil sont relâchés.

Par ailleurs, le document WO03047028 divulgue une antenne résonnante de détection ou d'identification. Dans ce document, le fil conducteur formant l'antenne est cousu sur un support textil, ce fil conducteur étant relié à une puce également disposée sur le support.

### OBJET DE L'INVENTION

La présente invention vise à fournir une étiquette électronique d'identification présentant un caractère souple et déformable qui se distingue de cet état de la technique.

### BREVE DESCRIPTION DE L'INVENTION

L'objet de l'invention propose une étiquette électronique selon la revendication 1.

Selon d'autres caractéristiques avantageuses et non limitatives de l'invention, prises seules ou selon toute combinaison techniquement réalisable :
- le dispositif électronique filaire est un dispositif électronique d'identification filaire ;
- l'étiquette électronique comprend au moins deux éléments filaires flexibles s'étendant parallèlement les uns aux autres dans le plan principal, le premier élément filaire étant retenu aux deux éléments filaires flexibles ;
- le premier élément filaire est tramé dans les mailles de la chaînette formant chaque élément filaire flexible ;
- le fil de contexture présente un pouvoir d'élongation et de retour élastique inférieur à 50% ou à 5% de sa longueur au repos ;
- l'étiquette électronique comprend deux éléments filaires additionnels disposés de part et d'autre du au moins un élément filaire flexible, le fil de contexture reliant en trame le au moins un élément filaire flexible et les deux éléments filaires additionnels ;
- le au moins un élément filaire additionnel est formé d'une chaînette constituée d'une colonne de mailles jetées ;
- le fil de contexture est tramé dans les mailles de la chaînette formant l'élément filaire flexible et dans les mailles de la chaînette formant l'élément filaire additionnel ;
- la chaînette comprend au moins un fil textile formé d'une âme élastique optionnellement guipée d'un fil de couverture ;
- l'âme élastique présente un pouvoir d'élongation et de retour élastique supérieur à 50% ou à 100% de sa longueur au repos ;
- le premier élément filaire comprend une âme support, le dispositif électronique filaire étant disposé colinéairement avec l'âme support, et un fil de couverture guipé sur l'âme support et le dispositif électronique filaire ;
- le premier élément filaire et le au moins un élément filaire flexible sont disposées dans une pochette ;
- l'étiquette électronique présente une largeur comprise entre 2 à 50 mm, une longueur comprise entre 30 et 150 mm et une épaisseur inférieure à 2mm.

Selon un autre aspect, l'invention propose un procédé de confection d'une pièce textile selon la revendication 14.

### BREVE DESCRIPTION DES DESSINS

D'autres caractéristiques et avantages de l'invention ressortiront de la description détaillée de l'invention qui va suivre en référence aux figures annexées sur lesquels :
[Fig. 1a]
[Fig. 1b]
[Fig. 1c]
[Fig. 1d]
[Fig. 1e]

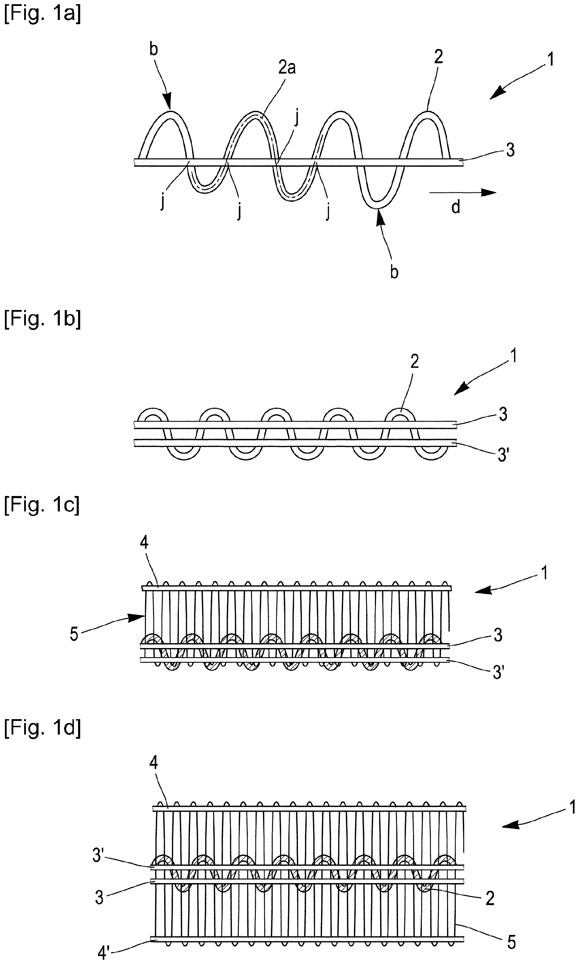

   Les figures 1a à 1e représentent divers modes de réalisation d'une étiquette électronique souple conforme à l'invention ;
[Fig. 2]

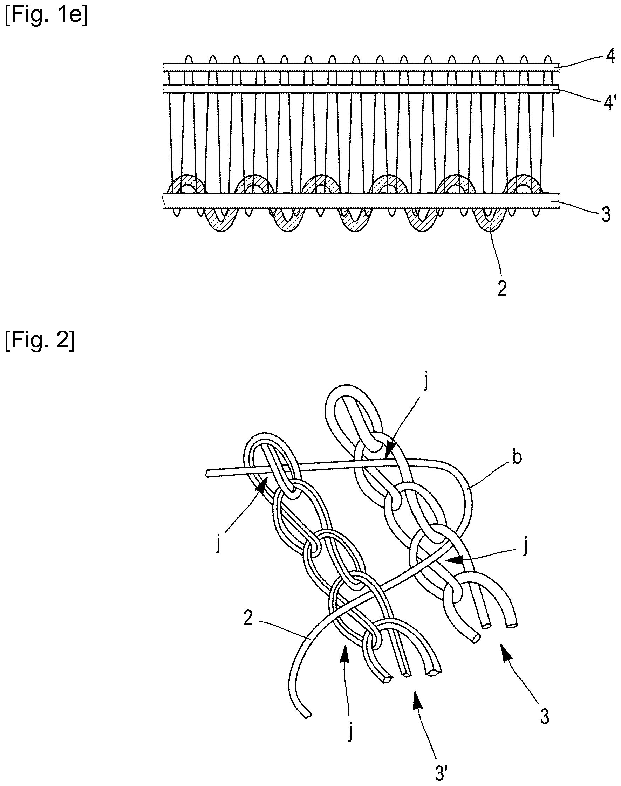

   La figure 2 illustre les jonctions retenant le premier élément filaire et l'élément filaire flexible ;
[Fig. 3]
[Fig. 4]

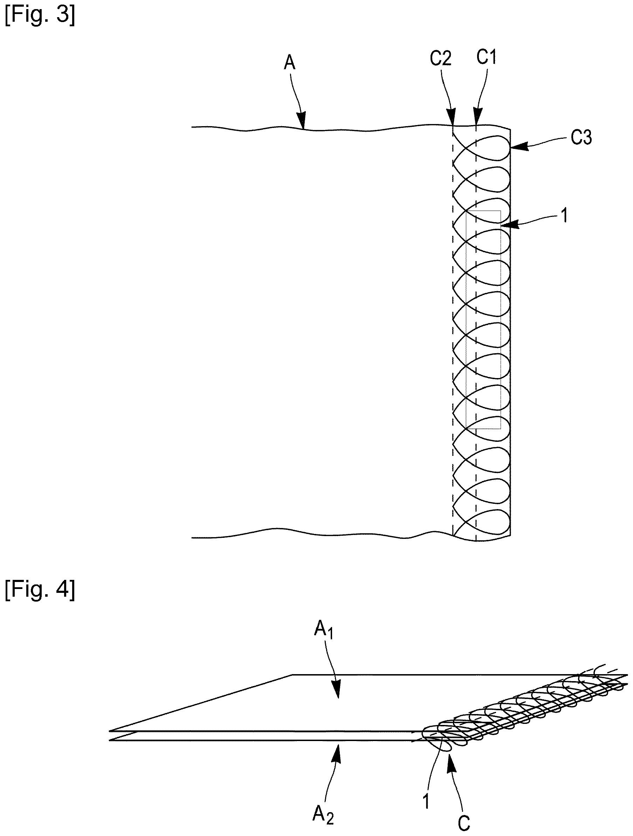

   Les figures 3 et 4 représentent plusieurs modes de mise en oeuvre d'une pièce textile incorporant des étiquettes électroniques conformes à l'invention.

### DESCRIPTION DETAILLEE DE L'INVENTION

### Dispositif électronique filaire

En préambule, on rappelle par souci de clarté qu'un dispositif électronique filaire est généralement constitué d'une puce électronique sur les plots de laquelle on a électriquement assemblé (par soudure par exemple) au moins un fil conducteur s'étendant longitudinalement, ce qui donne le caractère filaire à ce dispositif, le tout pouvant éventuellement être incorporé, au moins en partie, dans un matériau de protection.

La puce électronique peut par exemple être une puce électronique d'identification (RFID) ayant des fonctions d'émission réception radiofréquence. Elle peut être associée à deux fils conducteurs qui peuvent former une antenne d'émission réception pour la puce électronique ou former des fils d'alimentation électrique de cette puce.

On désignera dans la suite de cet exposé par « dispositif électronique d'identification filaire » une puce RFID électriquement reliée à au moins une antenne formée d'au moins un fil conducteur. Bien que l'étiquetage électronique d'identification d'objet soit le domaine d'application choisie pour la présente description, il n'est pas indispensable que la puce électronique du dispositif électronique soit constituée d'une puce électronique d'identification. Il peut s'agir d'une manière plus générale de tout type de puce électronique, par exemple une puce électronique formant un capteur qui peut optionnellement incorporer des fonctions d'émission-réception reliées à l'antenne afin de pouvoir communiquer ces mesures. Il peut à titre d'exemple complémentaire s'agir d'une puce électronique présentant des fonctions de luminescence, la puce étant alimentée électriquement par le fil conducteur. De ce point de vue, et d'une manière générale, l'invention concerne donc une étiquette électronique souple et déformable comprenant un dispositif électronique filaire. Les dispositifs électroniques filaires sont généralement fabriqués collectivement sous la forme d'une chaîne de dispositifs, c'est-à-dire d'une pluralité de puces électroniques reliées entre elles par au moins un fil conducteur (et préférentiellement deux fils conducteurs ou plus). Dans un mode préféré de mise en oeuvre, les puces électroniques peuvent être munies de rainures dans lesquelles sont logés le ou les fil(s) conducteur(s). Des plots de connexion sont disposés dans les rainures en contact électrique avec le ou les fils conducteurs. Une telle chaîne, ou un segment de cette chaîne, constitue bien un élément filaire incorporant un dispositif électronique filaire au sens de la présente description. On trouvera dans les documents US8782880, EP2810299 ou WO2018193198 des détails complémentaires sur des caractéristiques possibles d'une telle chaîne. En particulier, les dispositifs électroniques filaires peuvent être recouverts par au moins un fil textile de couverture, par exemple par guipage du fil de couverture. On peut également prévoir un fil d'âme le long duquel les dispositifs électroniques filaires sont disposés colinéairement ou en spire. En complément ou en remplacement du fil de couverture et/ou du fil d'âme, on peut prévoir d'enrober les dispositifs électroniques filaires d'une matière d'encapsulation qui peut être un plastique, formé par exemple par extrusion.

Les documents EP2585628 et WO2019175509 divulguent différents modes de réalisation préférés de fil RFID compatibles avec la suite de la présente description, mais sans toutefois former les seuls modes de réalisation envisageables. Ces documents prévoient notamment un mode de réalisation selon lequel on peut incorporer dans un fil textile, et à espacements réguliers et choisis, des dispositifs électroniques d'identification filaires. Dans les fils RFID décrits par ces documents les fils conducteurs d'antenne du dispositif électronique d'identification filaire sont disposés colinéairement ou en spirale, autour d'un fil d'âme qui peut présenter une caractéristique élastique. Lorsque le fil d'antenne est disposé en spirale, il présente une grande capacité d'élongation qui rend ce fil RFID particulièrement adapté à son intégration à des pièces textiles élastiques.

### Etiquette électronique souple et déformable

En référence à la figure 1a, une étiquette électronique 1 souple et déformable est formée d'un premier élément filaire 2 incorporant ou formant un dispositif électronique filaire 2a. Ce premier élément filaire 2 est agencé « en serpentin » dans un plan principal pour définir une pluralité de boucles b. L'étiquette électronique 1 comprend également au moins un élément filaire flexible 3 disposé selon une direction longitudinale d dans le plan principal défini par l'agencement selon deux dimensions du premier élément filaire 2. Le premier élément filaire 2 et l'élément filaire flexible 3 sont retenus l'un à l'autre au niveau d'une pluralité de jonctions j.

Par « élément filaire » on désigne un élément composé à partir d'un ou d'une pluralité de fils textiles. Comme on l'a précisé en introduction de cette demande, de tels fils textiles présentent une résistance en tension, une flexibilité, et un facteur de forme conventionnel dans le domaine du tissage pour être manipulés par des équipements disponibles dans le secteur de la confection. C'est notamment le cas du ou des fils conducteurs formant le dispositif électronique filaire 2a.

Le caractère souple de l'étiquette 1 est assuré par les propriétés textiles du premier élément filaire 2 et de l'élément filaire flexible 3 qui la composent, ainsi que par l'agencement en serpentin du premier élément filaire 2. Les éventuels efforts qui pourraient s'appliquer à l'étiquette 1 sont au moins en partie absorbés par l'élément filaire flexible 3 et/ou dans les boucles du premier élément filaire 2.

On note par ailleurs que l'étiquette électronique 1 combine le premier élément filaire 2 et l'élément filaire flexible 3, qui essentiellement sont des éléments s'étendant selon une unique dimension, pour former une étiquette « 2D » s'étendant essentiellement selon les deux dimensions du plan principal. Ce caractère 2D, assuré par l'agencement « en serpentin » du premier élément filaire 2, confère à l'étiquette 2D une forme de ruban, ce qui facilite sa manipulation et son intégration dans toute sorte d'objets, tel que dans une pièce textile par exemple au cours de sa confection.

L'étiquette électronique 1 peut ainsi se présenter sous une forme rectangulaire de très faible épaisseur, par exemple présentant une largeur comprise entre 2 à 50 mm, une longueur comprise entre 30 et 150 mm et une épaisseur inférieure à 2mm. Le pas d'une période complète du premier élément filaire 2 agencé en serpentin peut être compris entre 3 et 10 mm.

Avantageusement, les jonctions j entre le premier élément filaire 2 et l'élément filaire flexible 3 sont disposées sur le premier élément filaire 2 pour que les boucles qui sont formées de part et d'autre de l'élément filaire flexible 3 soit sensiblement de mêmes dimensions. Dit autrement, l'élément filaire flexible 3 est disposé dans une portion latéralement centrée de l'élément filaire 2.

Comme on l'a déjà évoqué lors de l'exposé général portant sur le dispositif électronique filaire 2a, le premier élément filaire 2 peut comprendre une âme support et le dispositif électronique filaire 2a, et notamment le fil conducteur, peut être disposé colinéairement avec cette âme support. Pour des raisons de protection et d'assemblage de l'ensemble, on peut dans ce cas prévoir un fil de couverture guipé autour de l'âme support et du dispositif électronique filaire 2a.

Alternativement, le premier élément filaire 2 peut être constitué du dispositif électronique filaire 2a enrobé d'un matériau de protection, une résine ou un plastique.

Ces deux modes particuliers de mise en oeuvre permettent à la fois de bien protéger le dispositif électronique filaire 2a, tout en conservant une dimension (le diamètre du premier élément conducteur) très réduite, de moins de 2mm. Cela permet de former une étiquette électronique 1 souple et déformable de très faible épaisseur, ce qui facilite son intégration dans un objet.

De manière avantageuse, et comme cela est représenté sur la figure 1b, on peut prévoir d'incorporer plusieurs éléments filaires flexibles 3, 3' s'étendant parallèlement les uns aux autres dans le plan principal. Dans ce cas, le premier élément filaire 2 est retenu à chacun des éléments filaires flexibles 3, 3'. Cette configuration permet de bien supporter le premier élément filaire 2, éviter que celui-ci ne s'affaisse de part et d'autre d'un unique élément filaire flexible 3, et préserver ainsi le caractère planaire de l'étiquette 1. Tout comme dans le mode de réalisation de la figure 1, l'élément filaire 2 est avantageusement centré sur la pluralité d'éléments filaires flexibles 3, 3'.

Pour améliorer encore la tenue de l'étiquette 1, on prévoit au moins un élément filaire additionnel 4 s'étendant dans le plan principal parallèlement à l'élément filaire flexible 3 et un fil de contexture 5 reliant en trame l'élément filaire flexible 3 et l'élément filaire additionnel 4. La combinaison de l'élément filaire flexible 3 (ou d'une pluralité de tels éléments), d'au moins un élément filaire additionnel 4 et du fil de contexture 5, forme en quelque sorte une pièce tissée ajourée, sur laquelle repose au moins en partie le premier élément filaire 2. Il n'est pas nécessaire que le premier élément filaire 2 soit retenu à l'élément filaire flexible additionnel 4. On note qu'outre sa fonction de retenue du premier élément filaire, le fil de contexture 5 peut être mis à profit pour imprégner avec efficacité l'étiquette de toute substance facilitant son intégration dans un objet. Par exemple, lorsque l'étiquette est une étiquette d'identification destinée à intégrer un objet en caoutchouc, tel qu'un pneu, l'étiquette peut être enduite d'un matériau favorisant son adhésion au caoutchouc, et la nature ajourée de l'étiquette favorise son imprégnation par ce matériau.

Sur la figure 1c, l'étiquette électronique déformable 1 comprend un unique élément filaire additionnel 4 et le premier élément filaire 2 n'est que partiellement supporté par le fil de contexture 5. Sur la figure 1d, deux éléments filaires additionnels 4, 4' sont disposés de part et d'autre de deux éléments filaires flexibles 3, 3', le fil de contexture 5 reliant en trame les deux éléments filaires flexibles 3, 3' et les deux éléments filaires additionnels 4, 4'. Enfin dans le mode de réalisation de la figure 1e, deux éléments filaires additionnels 4, 4' sont disposés d'un même coté des deux éléments filaires flexibles 3, 3'.

La nature du fil de contexture 5 peut être choisie très librement. Il peut notamment être composé de plusieurs fils parallèles qui peuvent être de natures différentes, par exemple un multifilaments polyamide et un monobrin de polyester.

On peut bien entendu mixer les caractéristiques des différents modes de réalisation présentés sur les figures 1a à 1e et, d'une manière générale, on peut prévoir un nombre quelconque d'éléments filaires flexibles 3, 3' et d'éléments filaires additionnels 4, 4' pour constituer une étiquette électronique souple et déformable conforme à la présente invention.

Avantageusement, les éléments filaires additionnels 4, 4' sont disposés suffisamment distants des éléments filaires flexibles 3, 3' pour que les boucles du premier élément filaire soient entièrement supportées par le fil de contexture 5. De manière encore plus avantageuse, cet espacement est suffisant pour définir une portion inerte de l'étiquette 1 s'étendant en bordure de sa longueur, c'est-à-dire une portion qui n'est pas occupée par le premier élément filaire 2. Cette zone inerte peut par exemple servir à solidariser l'étiquette 1 à un objet, par exemple par couture sur une pièce textile, sans risquer d'endommager le dispositif électronique compris dans le premier élément filaire. Cette portion inerte peut ainsi présenter une largeur de 2 à 20 mm.

Les éléments filaires flexibles 3, 3' et, avantageusement, les éléments filaires additionnels 4, 4', sont formés d'une chaînette constituée d'une colonne de mailles jetées. Ces éléments étant disposés parallèlement les uns aux autres selon la direction longitudinale d, ils peuvent être élaborés très simplement et sur une grande longueur avec un équipement traditionnel, du type machine Rachel, de tricot chaîne. On rappelle qu'il s'agit de tricots dans lesquels les mailles sont formées essentiellement dans le sens de la longueur du tricot. Les tricots chaîne sont caractérisés par le fait que chaque fil est alimenté parallèlement à la direction de la fabrication du tricot. La colonne de mailles contribue au caractère flexible des éléments filaires flexibles 3, 3' et additionnels 4, 4'. Ils peuvent notamment absorber au moins en partie les contraintes en tension qui pourraient s'appliquer sur l'étiquette, et lui conférer un caractère partiellement élastique. De plus, on peut dans ce cas former les jonctions j en tramant le premier élément filaire 2 dans les mailles de la chaînette formant chaque élément filaire flexible 3, 3', comme cela est illustré sur la figure 2.

Les fils textiles de chaînette peuvent comprendre au moins un fil textile formé d'une âme élastique, par exemple constituée d'un fil de polyuréthane ou d'élasthanne, optionnellement guipée d'un fil de couverture .

Avec le au moins un élément filaire additionnel 4 et le fil de contexture 5, on constitue un tricot en mailles jetées tramées, c'est-à-dire un tricot en mailles jetées dont les boucles des chaînettes sont reliées entre elles par un ou plusieurs fils de trame, ici le fil de contexture 5. Le fil de contexture 5 est également tramé dans les mailles de la chaînette formant l'élément filaire flexible 3, 3' et dans les mailles de la chaînette formant l'élément filaire additionnel 4, 4'.

On peut jouer sur la nature des fils textiles constituant l'élément filaire flexible 3, 3', l'élément filaire additionnel 4, 4' et le fil de contexture 5 pour maîtriser la déformation possible de l'étiquette 1. Ainsi, pour former une étiquette 1 déformable principalement dans sa longueur et relativement moins flexible dans sa largeur, on peut choisir le fil de contexture 5 pour qu'il présente un pouvoir d'élongation et de retour élastique inférieur à 50% ou à 5% de sa longueur au repos et choisir les fils constituant les éléments filaires flexibles 3, 3' et additionnels 4, 4' pour qu'ils présentent un pouvoir d'élongation et de retour élastique supérieur à 50% ou à 100% de sa longueur au repos.

Comme on l'a déjà évoqué, la fabrication d'une étiquette conforme à l'invention met en oeuvre des techniques et des équipements parfaitement conventionnels de tricotage à chaîne. Un tel équipement est alimenté en fils textiles pour former les éléments filaires flexibles 3, 3', additionnels 4, 4' et le fil de contexture 5. Il est également alimenté en un fil de grande longueur incorporant le long de cette longueur une pluralité de dispositifs électroniques filaires 2a en vue de former le premier élément filaire 2 en serpentin. Cet équipement transforme ces matières pour former un ruban de grande longueur par exemple en tricotant sous la forme de chaînettes les éléments filaires flexibles 3, 3' et additionnels 4, 4', en tramant le fil de contexture 5 et le fil comprenant les dispositifs électroniques filaires en serpentin. On trouvera dans les documents FR2899603 et FR2429854 des exposés plus détaillés de ces opérations.

Ce ruban de grande longueur peut être découpé pour former une pluralité d'étiquettes souples et déformables 1, en prenant soin bien entendu de choisir les lignes de découpe pour préserver le caractère fonctionnel du ou des dispositif(s) électronique(s) filaire(s) retenu par l'étiquette 1.

Lorsque l'étiquette vise une application dans le domaine de la confection, par exemple pour l'étiquetage électronique de vêtement, il peut être avantageux, mais sans que cela soit indispensable, de prévoir une pochette de recouvrement textile pour encapsuler l'ensemble et faciliter son exploitation par un équipement de confection, par exemple une surjeteuse. La pochette peut contribuer à définir une zone inerte de l'étiquette 1, notamment lorsque l'agencement du premier élément filaire 2 sur le ou les élément(s) filaire(s) flexible(s) 3, 3' ne définit pas une telle zone.

On note enfin que la disposition « en serpentin » du premier élément filaire 2 portant le dispositif électronique filaire permet, pour une longueur déterminée de cet élément filaire, de proposer une étiquette électronique de longueur relativement réduite. Dans le domaine des étiquettes électroniques d'identification, la longueur de l'étiquette est souvent dictée par la longueur nécessaire de l'antenne, ici le fil conducteur relié électriquement à la puce RFID du premier élément filaire. On comprend qu'en disposant ce premier élément filaire en serpentin, il est possible de réduire la longueur de l'étiquette.

De manière surprenante, l'agencement en serpentin du fil conducteur formant l'antenne (et conduisant à donner ce facteur de forme 2D à l'étiquette électronique) présente certaines caractéristiques de transmission améliorées par rapport à une étiquette d'identification dans laquelle ce fil conducteur est maintenu rectiligne. Il a notamment été noté que le couplage entre étiquettes d'identification placées à proximité les unes des autres étaient moindre avec une étiquette conforme à l'invention, ce qui permet d'identifier ces produits avec plus de robustesse, même s'ils sont tous disposés à proximité les uns des autres, par exemple à moins de 10mm les uns des autres.

### Exemple d'application.

Une étiquette conforme à la présente invention présente des facteurs de forme qui permettent de la manipuler très facilement pour les intégrer dans un produit. Dans les applications visant le domaine de la confection, on peut notamment coudre une telle étiquette sur une pièce textile, en faisant courir des points de couture dans la ou les zone(s) inerte(s) de l'étiquette.

Selon une approche particulièrement avantageuse, et qui forme d'ailleurs un aspect en soi de la présente invention, on solidarise au moins une étiquette à la pièce textile par l'intermédiaire d'une couture de confection, avantageusement sur un bord de cette pièce textile. Une telle couture de confection est une couture dont la fonction première est de traiter la pièce textile pour en faire un produit fini. La présente invention prévoit de tirer profit de cette couture de confection pour y intégrer l'étiquette, de sorte que le dispositif électronique filaire au moins soit disposé au sein de cette couture. De cette manière on protège efficacement ce dispositif électronique avec le fil de couture, et il peut s'intégrer très facilement.

Les points constituant la couture peuvent être de nature très variés, tel que cela est documenté dans la norme ISO 4915. Il peut ainsi s'agir d'un ourlet invisible à un fil (de classe 103 selon la norme iso:4915), des points de surfil, des points de bourdon ou zigzag (de classe 304), des points de recouvrement (de classe 406 ou 407), des points de surjet (selon l'un des points de la classe 500), des points droits (de classe 301 ou 2x301).

Sans pour autant exclure les points d'autre nature, la couture permettant de solidariser l'étiquette 1 à la pièce textile est avantageusement formée de points de surjet, et le dispositif électronique d'identification filaire est placé dans les boucles des points de surjet. On rappelle que dans les points de surjet, des fils bouclent autour du bord de la pièce textile. Ces points forment une étape de confection d'une pièce textile visant à traiter le bord de cette pièce. Elle est typiquement mise en oeuvre par une surjeteuse qui est un équipement de confection textile permettant de simultanément assembler, filer les bords et de couper un excédent de tissu. Elle permet d'assembler des pièces de tissus en surfilant les bords de ces pièces. Un tel équipement est muni d'une pluralité d'aiguilles approvisionnées par une pluralité de fils textiles (au moins deux, parfois 5 ou plus) issus de bobines qui permettent de coudre et de surfiler simultanément la ou les pièces textiles. Il est également muni d'une lame pour couper un excédent de tissu.

On a ainsi représenté sur la figure 3 une pièce textile A à laquelle une étiquette électronique d'identification 1 conforme à l'invention a été solidarisée, en la disposant entièrement entre les boucles du surjet.

On observe sur cette figure que l'étiquette 1 peut être retenue à la pièce textile A d'une part par l'intermédiaire d'une première couture droite C1 formée par une première aiguille de la surjeteuse, et sensiblement parallèle à un bord de l'étiquette 1, dans une zone inerte de cette étiquette. Par ailleurs, l'étiquette 1 est maintenue contre la pièce textile par les boucles C3 du surjet formées par une ou plusieurs autres aiguilles.

On peut naturellement prévoir d'autres coutures, formées par d'autres aiguilles, par exemple une seconde couture C2 sur la figure 3 parallèle à la première, l'ensemble de ces coutures formant les points de surjet.

Pour solidariser l'étiquette 1 et aboutir à la pièce textile A représentée sur la figure 3, on peut préalablement positionner à la main l'étiquette 1 sur la pièce et faire glisser l'ensemble sous un pied de glissement de l'équipement de surjetage. Mais de manière avantageuse, on peut prévoir un outillage additionnel dans lequel une étiquette est positionnée et guidée pendant l'opération de couture pour s'intégrer à cette couture. On peut également prévoir un équipement automatique sur lequel est montée une pluralité d'étiquettes sous la forme d'une bobine. L'équipement est alors apte à faire défiler cette bobine pour la couper, et ainsi définir une étiquette, et insérer cette étiquette pour qu'elle soit introduite au sein de la couture au cours de sa fabrication.

Il n'est pas nécessaire que toute l'étiquette 1 soit disposée entre les boucles de surjet de la pièce textile.

La figure 4 représente un autre mode de confection d'une pièce textile, dans lequel l'étiquette 1 est disposée entre deux pièces textiles élémentaires A1, A2 qui sont maintenues l'une à l'autre par la couture C. Dans ce cas également on prévoit à minima de placer le fil RFID dans des boucles des points de surjet, et éventuellement l'étiquette 1 entière. Au moins une couture droite permet de solidariser l'étiquette aux deux pièces textiles élémentaires entre lesquelles elle est placée.

L'intégration de l'étiquette 1 peut se faire de manière répétable, fiable et robuste. Elle fait appel à des techniques de confection éprouvées, et ne génère pas de surcout excessif, puisqu'elle s'intègre dans des étapes déjà existantes de confection.

Bien entendu l'invention n'est pas limitée aux modes de mise en oeuvre décrits et on peut y apporter des variantes de réalisation sans sortir du cadre de l'invention tel que défini par les revendications.

L'étiquette électronique souple et déformable selon l'invention peut être intégrée ou apposée à des produits de nature très différentes comme des produits vestimentaires, chaussures, semelles et produits chaussants, des équipements de protection individuelle, des produits pour la santé, des revêtements de surface, des appareillages électriques, des produits de construction de bâtiments et de construction marine, des revêtements de pièces métalliques ou plastiques, des pièces d'accouplements et d'articulations élastiques, des pièces moulées caoutchouc métal, des airbags. Elle peut également être intégrée à des composites textile/polymère, des pneumatiques, des tuyaux flexibles et rigides, des bandes de transports, des toiles techniques, les éléments allongés tels que des tubes, tuyaux, manchons, cordes, câbles, fils et lanières.

## Revendications

1. Etiquette électronique (1) souple et déformable comprenant :
- un premier élément filaire (2) de nature textile incorporant un dispositif électronique filaire (2a), le premier élément filaire (2) étant agencé en serpentin selon deux dimensions définissant un plan principal pour définir une pluralité de boucles (b) ;
- au moins un élément filaire flexible (3) de nature textile disposé selon une direction longitudinale (d) dans le plan principal ;
le premier élément filaire (2) étant retenu à chaque élément filaire flexible (3,3') au niveau d'une pluralité de jonctions (j)
**caractérisée en ce que** le au moins un élément filaire flexible (3, 3') est formé d'une chaînette constituée d'une colonne de mailles jetées, et
**en ce que** l'étiquette électronique (1) comprend :
- au moins un élément filaire additionnel (4) s'étendant parallèlement à chaque élément filaire flexible (3,3') dans le plan principal, le premier élément filaire (2) n'étant pas retenu à l'élément filaire flexible additionnel (4) ; et
- un fil de contexture (5) reliant en trame chaque élément filaire flexible (3,3') et l'élément filaire additionnel (4) .

2. Etiquette électronique (1) selon la revendication précédente dans laquelle le dispositif électronique filaire (2a) est un dispositif électronique d'identification filaire.

3. Etiquette électronique (1) selon l'une des revendications précédentes comprenant au moins deux éléments filaires flexibles (3, 3') s'étendant parallèlement les uns aux autres dans le plan principal, le premier élément filaire (2) étant retenu aux deux éléments filaires flexibles (3, 3').

4. Etiquette électronique (1) selon l'une des revendications précédentes dans lequel le premier élément filaire (2) est tramé dans les mailles de la chaînette formant chaque élément filaire flexible (3, 3').

5. Etiquette électronique (1) selon l'une des revendications précédentes dans lequel le fil de contexture (5) présente un pouvoir d'élongation et de retour élastique inférieur à 50% ou à 5% de sa longueur au repos.

6. Etiquette électronique (1) selon l'une des revendications précédentes comprenant deux éléments filaires additionnels (4, 4') disposés de part et d'autre du au moins un élément filaire flexible (3, 3'), le fil de contexture (5) reliant en trame le au moins un élément filaire flexible (3) et les deux éléments filaires additionnels (4, 4').

7. Etiquette électronique (1) selon la revendication 6 dans lequel le au moins un élément filaire additionnel (4, 4') est formé d'une chaînette constituée d'une colonne de mailles jetées.

8. Etiquette électronique (1) selon la revendication 1 et la revendication 7 dans lequel le fil de contexture (5) est tramé dans les mailles de la chaînette formant l'élément filaire flexible (3, 3') et dans les mailles de la chaînette formant l'élément filaire additionnel (4, 4').

9. Etiquette électronique (1) selon la revendication 1 et/ou la revendication 7 dans laquelle la chaînette comprend au moins un fil textile formé d'une âme élastique optionnellement guipée d'un fil de couverture.

10. Etiquette électronique (1) selon la revendication précédente dans laquelle l'âme élastique présente un pouvoir d'élongation et de retour élastique supérieur à 50% ou à 100% de sa longueur au repos.

11. Etiquette électronique (1) selon l'une des revendications précédentes dans lequel le premier élément filaire (2) comprend une âme support, le dispositif électronique filaire (2a) étant disposé colinéairement avec l'âme support, et un fil de couverture guipé sur l'âme support et le dispositif électronique filaire.

12. Etiquette électronique (1) selon l'une des revendications précédentes, dans laquelle le premier élément filaire (2) et le au moins un élément filaire flexible (3, 3') sont disposées dans une pochette.

13. Etiquette électronique selon l'une des revendications précédentes présentant une largeur (l) comprise entre 2 à 50 mm, une longueur (L) comprise entre 30 et 150 mm et une épaisseur inférieure à 2 mm.

14. Procédé de confection d'une pièce textile (A ; A1, A2) comprenant une étape de formation d'une couture de confection (c1, c2, c3 ; C), le procédé étant **caractérisé en ce que** l'étape de formation de la couture de confection vise également à solidariser une étiquette électronique (1) selon l'une des revendications 1 à 13 à la pièce textile (A ; A1, A2) .

## Patentansprüche

1. Elektronisches Etikett (1), das biegbar und verformbar ist, umfassend:
- ein erstes Drahtelement (2) textiler Natur, das eine elektronische Drahtvorrichtung (2a) einschließt, wobei das erste Drahtelement (2) in Schlangenform gemäß zwei Dimensionen eingerichtet ist, die eine Hauptebene zum Definieren einer Vielzahl von Schleifen (b) definieren;
- mindestens ein flexibles Drahtelement (3) textiler Natur, das gemäß einer Längsrichtung (d) in der Hauptebene angeordnet ist;
wobei das erste Drahtelement (2) an jedem flexiblen Drahtelement (3, 3') auf Höhe einer Vielzahl von Verbindungsstelle (j) gehalten wird
**dadurch gekennzeichnet, dass** das mindestens eine flexible Drahtelement (3, 3') aus einem Kettchen ausgebildet ist, das aus einem Kettmaschenstäbchen besteht, und
**dadurch, dass** das elektronische Etikett (1) umfasst:
- mindestens ein zusätzliches Drahtelement (4), das sich parallel zu jedem flexiblen Drahtelement (3, 3') in der Hauptebene erstreckt, wobei das erste Drahtelement (2) nicht an dem zusätzlichen Drahtelement (4) gehalten wird; und
- ein Aufbaugarn (5), das jedes flexible Drahtelement (3, 3') und das zusätzliche Drahtelement (4) in Schuss verbindet.

2. Elektronisches Etikett (1) nach dem vorstehenden Anspruch, wobei die elektronische Drahtvorrichtung (2a) eine elektronische Drahtidentifikationsvorrichtung ist.

3. Elektronisches Etikett (1) nach einem der vorstehende Ansprüche, umfassend mindestens zwei flexibles Drahtelemente (3, 3'), die sich parallel zueinander in der Hauptebene erstrecken, wobei das erste Drahtelement (2) an zwei flexiblen Drahtelementen (3, 3') gehalten wird.

4. Elektronisches Etikett (1) nach einem der vorstehenden Ansprüche, wobei das erste Drahtelement (2) in die Maschen des Kettchens eingeschossen ist, das jedes flexible Drahtelement (3, 3') ausbildet.

5. Elektronisches Etikett (1) nach einem der vorstehenden Ansprüche, wobei das Aufbaugarn (5) ein Dehnungs- und Rückfederungsvermögen von weniger als 50 % oder als 5 % seiner Länge im Ruhezustand vorweist.

6. Elektronisches Etikett (1) nach einem der vorstehenden Ansprüche, umfassend zwei zusätzliche Drahtelemente (4, 4'), die auf beiden Seiten des mindestens einen flexiblen Drahtelements (3, 3') angeordnet sind, wobei das Aufbaugarn (5) das mindestens eine flexible Drahtelement (3) und die zwei zusätzlichen Drahtelemente (4, 4') in Schuss verbindet.

7. Elektronisches Etikett (1) nach Anspruch 6, wobei das mindestens eine zusätzliche Drahtelement (4, 4') aus einem Kettchen ausgebildet ist, das aus einem Kettmaschenstäbchen besteht.

8. Elektronisches Etikett (1) nach Anspruch 1 und 7, wobei das Aufbaugarn (5) in die Maschen des Kettchens, das das flexible Drahtelement (3, 3') ausbildet, und in die Maschen des Kettchens, das das zusätzliche Drahtelement (4, 4') ausbildet, eingeschossen ist.

9. Elektronisches Etikett (1) nach Anspruch 1 und/oder Anspruch 7, wobei das Kettchen mindestens ein Textilgarn umfasst, das aus einem elastischen Kernfaden ausgebildet ist, der optional mit einem Abdeckgarn übersponnen ist.

10. Elektronisches Etikett (1) nach einem der vorstehenden Ansprüche, wobei der elastische Kernfaden ein Dehnungs- und Rückfederungsvermögen von mehr als 50 % oder als 100 % seiner Länge im Ruhezustand vorweist.

11. Elektronisches Etikett (1) nach einem der vorstehenden Ansprüche, wobei das erste Drahtelement (2) einen Trägerkernfaden umfasst, wobei die elektronische Drahtvorrichtung (2a) kollinear mit dem Trägerkernfaden angeordnet ist, und ein Abdeckgarn auf dem Trägerkernfaden und dem elektronischen Drahtelement übersponnen ist.

12. Elektronisches Etikett (1) nach einem der vorstehenden Ansprüche, wobei das erste Drahtelement (2) und das mindestens eine flexible Drahtelement in einer Tasche (3, 3') angeordnet sind.

13. Elektronisches Etikett nach einem der vorstehenden Ansprüche, das eine Breite (I) zwischen 2 und 50 mm, eine Länge (L) zwischen 30 und 150 mm und eine Dicke kleiner als 2 mm vorweist.

14. Verfahren zum Anfertigen eines Textilstücks (A; A1, A2), umfassend einen Schritt eines Ausbildens einer Anfertigungsnäharbeit (c1, c2, c3; C), wobei das Verfahren **dadurch gekennzeichnet ist, dass** der Schritt des Ausbildens der Anfertigungsnäharbeit auch darauf abzielt, ein elektronisches Etikett (1) nach einem der Ansprüche 1 bis 13 mit dem Textilstück (A; A1, A2) fest zu verbinden.

## Claims

1. Flexible and deformable electronic label (1) comprising:
- a first textile wire element (2) incorporating a wired electronic device (2a), the first wire element (2) being arranged in a serpentine manner in two dimensions which define a main plane to define a plurality of loops (b);
- at least one flexible textile wire element (3) arranged in a longitudinal direction (d) in the main plane;
the first wire element (2) being held at each flexible wire element (3,3') at a plurality of junctions (j)
**characterized in that** the at least one flexible wire element (3, 3') is made from a small chain consisting of a column of warp stitches, and
**in that** the electronic label (1) comprises:
- at least one additional wire element (4) extending in parallel with each flexible wire element (3, 3') in the main plane, the first wire element (2) not being held at the additional flexible wire element (4); and
- a structure yarn (5) connecting each flexible wire element (3,3') and the additional wire element (4) in a weft.

2. Electronic label (1) according to the preceding claim, wherein the wired electronic device (2a) is a wired electronic identification device.

3. Electronic label (1) according to either of the preceding claims, comprising at least two flexible wire elements (3, 3') extending in parallel with one another in the main plane, the first wire element (2) being held at the two flexible wire elements (3, 3').

4. Electronic label (1) according to any of the preceding claims, wherein the first wire element (2) is weaved in the stitches of the small chain that forms each flexible wire element (3, 3').

5. Electronic label (1) according to any of the preceding claims, wherein the structure yarn (5) has an elongation capacity and elastic recovery capacity of less than 50% or 5% of its length at rest.

6. Electronic label (1) according to any of the preceding claims, comprising two additional wire elements (4, 4') arranged on either side of the at least one flexible wire element (3, 3'), the structure yarn (5) connecting the at least one flexible wire element (3) and the two additional wire elements (4, 4') in a weft.

7. Electronic label (1) according to claim 6, wherein the at least one additional wire element (4, 4') is made from a small chain consisting of a column of warp stitches.

8. Electronic label (1) according to claim 1 and claim 7, wherein the structure yarn (5) is weaved in the stitches of the small chain forming the flexible wire element (3, 3') and in the stitches of the small chain forming the additional wire element (4, 4').

9. Electronic label (1) according to claim 1 and/or claim 7, wherein the small chain comprises at least one textile wire made from an elastic core optionally covered with a covering wire.

10. Electronic label (1) according to the preceding claim, wherein the elastic core has an elongation capacity and elastic recovery capacity greater than 50% or 100% of its length at rest.

11. Electronic label (1) according to any of the preceding claims, wherein the first wire element (2) comprises a support core, the wired electronic device (2a) being arranged colinearly with the support core, and a covering wire covered on the support core and the wired electronic device.

12. Electronic label (1) according to any of the preceding claims, wherein the first wire element (2) and the at least one flexible wire element (3, 3') are arranged in a pocket.

13. Electronic label according to any of the preceding claims, having a width (I) of between 2 to 50 mm, a length (L) of between 30 and 150 mm and a thickness of less than 2 mm.

14. Method for making a textile part (A; A1, A2) comprising a step of forming a making seam (c1, c2, c3; C), the method being **characterized in that** the step of forming the making seam also aims to rigidly connect an electronic label (1) according to any of claims 1 to 13 to the textile part (A; A1, A2).
